**Europäisches Patentamt**

**European Patent Office**

**Office européen des brevets**

(19)

(11) Veröffentlichungsnummer: **0 246 484 B1**

(12)

# EUROPÄISCHE PATENTSCHRIFT

(45) Veröffentlichungstag der Patentschrift: 16.08.90

(51) Int. Cl.⁵: **F16B 37/12, F02F 1/24**

(21) Anmeldenummer: 87106449.9

(22) Anmeldetag: 05.05.87

(54) **Verschraubung für den Zylinderkopf einer Brennkraftmaschine.**

(30) Priorität: 16.05.86 DE 3616629

(43) Veröffentlichungstag der Anmeldung:
25.11.87 Patentblatt 87/48

(45) Bekanntmachung des Hinweises auf die Patenterteilung:
16.08.90 Patentblatt 90/33

(84) Benannte Vertragsstaaten:
DE FR GB IT

(56) Entgegenhaltungen:
EP-A- 228 533
DE-A- 2 365 413
DE-B- 1 113 335
DE-U- 1 767 628
FR-A- 617 048
FR-A- 636 678
GB-A- 2 176 844

PATENT ABSTRACTS OF JAPAN, Band 8,
Nr. 128 (M-302)[1565], 14. Juni 1984; & JP - A
- 59 29833 (HONDA GIKEN KOGYO K.K.) 17.02.1984
PATENT ABSTRACTS OF JAPAN, Band 10,
Nr. 66 (M-461)[2123], 15. März 1986; & JP - A
- 60 209 648 (NISSAN JIDOSHA K.K.) 22.10.1985

(73) Patentinhaber: AUDI AG,
Auto-Union-Strasse 1 Postfach 220,
D-8070 Ingolstadt(DE)

(72) Erfinder: Ruf, Max, Ingenieur, Römerstrasse 11,
7107 Obereisesheim(DE)
Erfinder: Korostenski, Erwin, Dipl-Ing., Erlenweg 4,
7107 Oedheim(DE)

(74) Vertreter: Speidel, Eberhardt,
Postfach 1320 Waldpromenade 26, D-8035 Gauting(DE)

**Beschreibung**

Die Erfindung bezieht sich auf eine Brennkraftmaschine gemäß dem Oberbegriff des Anspruchs 1.

Bei den bekannten Brennkraftmaschinen erfolgt die Befestigung des Zylinderkopfes am Zylinderkurbelgehäuse entweder durch Sechskantschrauben oder durch in das Zylinderkurbelgehäuse eingeschraubte Stiftschrauben, wobei die Schraubenköpfe bzw. die Muttern über Beilagscheiben an einer Planfläche des Zylinderkopfes anliegen. Die Abmessungen der Beilagscheiben müssen dabei so gewählt werden, daß die zulässige Flächenpressung, die bei den üblichen Leichtmetallegierungen etwa 150 N/mm² beträgt, nicht überschritten wird. Dazu muß der Außendurchmesser der Beilagscheibe erheblich größer sein als der Außendurchmesser des Schraubenkopfes bzw. der Mutter. Derartige Beilagscheiben lassen sich jedoch insbesondere bei Zylinderköpfen mit mehr als zwei Ventilen pro Zylinder infolge der beengten Platzverhältnisse nicht unterbringen. Um hier Abhilfe zu schaffen, ist es bekannt, (DE-B 2 733 445), die Beilagscheibe unsymmetrisch, beispielsweise in Form eines Kreisringes mit einer segmentartig abgeflachten Seite, auszubilden, und ein Drehen der Beilagscheibe beim Einschrauben der Zylinderkopfschraube bzw. beim Aufschrauben der Mutter durch eine Rippe zu verhindern, die an der Unterseite der Beilagscheibe vorgesehen ist und in das weichere Material des Zylinderkopfes eingedrückt wird. Damit kann jedoch nur eine Verschiebung der Auflagefläche erreicht werden, deren Größe durch die zulässige Flächenpressung bestimmt ist und unverändert bleibt. Diese große Auflagefläche ist jedoch in manchen Fällen nicht zu verwirklichen.

Aus der FR-A 617 048 ist eine Zylinderkopfverschraubung bekannt, bei der für jede Zylinderkopfschraube in den Leichtmetall-Zylinderkopf eine Büchse aus hartem Metall eingegossen ist, die sich vollständig durch den Zylinderkopf hindurch erstreckt und mit ihrer einen Stirnfläche auf der Oberfläche des Zylinderkurbelgehäuses aufliegt, während ihre andere, äußere Stirnfläche als Auflagefläche für die Mutter der Zylinderkopfschraube dient. Dabei wird die Schraubenkraft direkt über die Hülse auf das Zylinderkurbelgehäuse übertragen, es findet jedoch keine Krafteinleitung in den Zylinderkopf statt, so daß die für die Dichtigkeit zwischen Zylinderkopf und Zylinderkurbelgehäuse erforderliche Verteilung der Schraubenkräfte auf die gesamte Auflagefläche des Zylinderkopfes nicht eintreten kann. Die Hülsen wirken vielmehr als Distanzhülsen, welche den erforderlichen Kraftfluß über den Zylinderkopf verhindern.

Der Erfindung liegt die Aufgabe zugrunde, eine Brennkraftmaschine der im Oberbegriff des Anspruchs 1 angegebenen Art zu schaffen, bei der auch bei außerordentlich beengten Platzverhältnissen eine ausreichende Auflagefläche zur sicheren Aufnahme der Schraubenkräfte durch den Leichtmetall-Zylinderkopf erreicht wird.

Diese Aufgabe wird erfindungsgemäß durch die im Kennzeichen des Anspruchs 1 angegebenen Merkmale gelöst.

Bei dem erfindungsgemäßen Vorschlag wird die Aufnahmefläche für die Schraubenkraft von den Flanken des Gewindes der Gewindehülse bestimmt und es kann demzufolge durch entsprechende Wahl der Anzahl der Gewindegänge eine ausreichende Fläche zur Aufnahme der Schraubenkraft zur Verfügung gestellt werden, um die Flächenpressung in den zulässigen Grenzen zu halten, ohne daß der hierfür nötige Platz größer sein muß als der Platzbedarf für den Kopf bzw. die Mutter der Zylinderkopfschraube.

Vorzugsweise ist das Gewinde der Gewindehülse andersgängig als das Gewinde der Zylinderkopfschraube, also linksgängig, wenn das Gewinde der Zylinderkopfschraube in üblicher Weise rechtsgängig ist. Dadurch wird verhindert, daß die Gewindehülse beim Festziehen der Zylinderkopfschraube mitgenommen und zusätzliche eingeschraubt wird. Vielmehr erfolgt ein Verspannen der Gewindehülse in dem Innengewinde der Bohrung. Dieses Verspannen kann noch verstärkt werden, wenn die äußere Stirnfläche der Gewindehülse die Form eines flachen Hohlkegels und die damit zusammenwirkende Stirnfläche des Kopfes bzw. der Mutter der Zylinderkopfschraube eine dazu komplementäre Form hat. Durch diese Formgebung wird die Gewindehülse gedehnt und gleichzeitig verhindert, daß eine Verformung der Gewindehülse in Richtung auf den Schraubenschaft erfolgt.

Schließlich kann in der Bohrung im Zylinderkopf eine Schulter vorgesehen werden, an der die Gewindehülse mit ihrer inneren Stirnfläche im eingeschraubten Zustand anliegt. Auf diese Schulter kann eine Scheibe aus einem härteren Material als dem Material des Zylinderkopfes aufgelegt werden, um eine Verformung dieser Schulter beim Einschrauben der Gewindehülse zu verhindern.

Ein Ausführungsbeispiel der Erfindung wird im folgenden unter Bezugnahme auf die Zeichnungen beschrieben. Es zeigt:

Fig. 1 einen Teilschnitt eines Zylinderkopfes und des benachbarten Bereiches eines Zylinderkurbelgehäuses,

Fig. 2 einen Schnitt des Zylinderkopfes entlang Linie 2-2 in Fig. 1, und

Fig. 3 einen Teilschnitt entlang Linie 3-3 in Fig. 1 in größerem Maßstab.

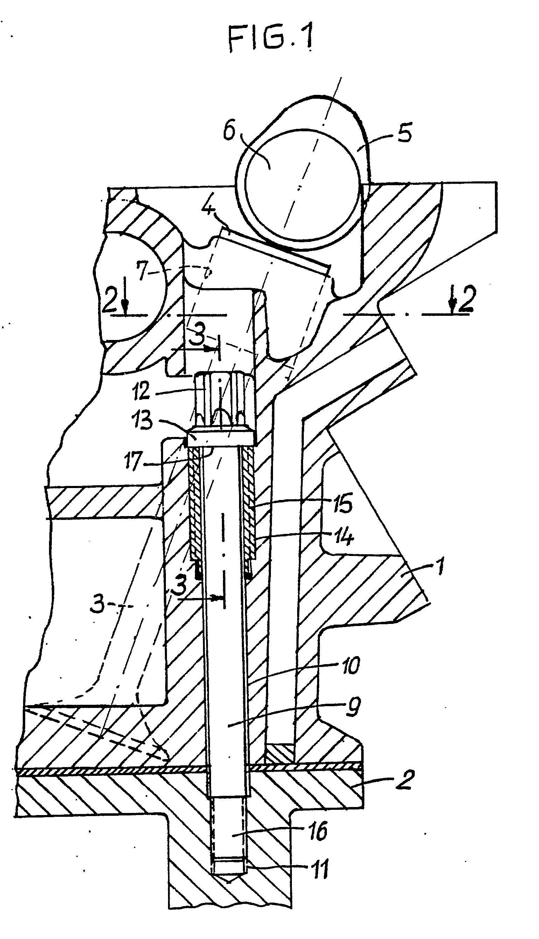

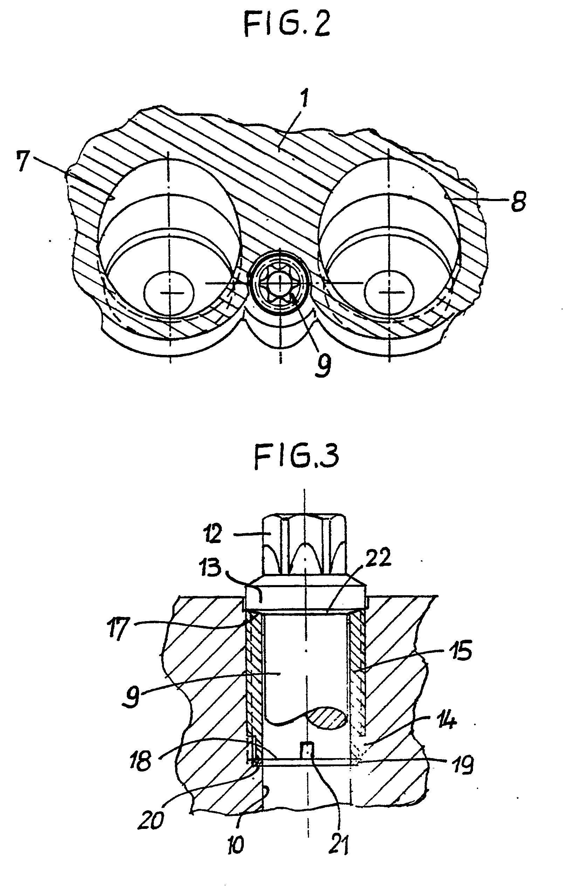

In Fig. 1 ist mit 1 ein Leichtmetall-Zylinderkopf einer Brennkraftmaschine und mit 2 ein Zylinderkurbelgehäuse bezeichnet. Der Zylinderkopf 1 weist im Ausführungsbeispiel für jeden Zylinder zwei Einlaßventile und zwei Auslaßventile auf, von denen nur ein Einlaßventil 3 angedeutet ist, daß einen Tassenstößel 4 aufweist, der von einem Nocken 5 einer obenliegenden Nockenwelle 6 betätigt wird. In Fig. 2 sind die Bohrungen 7 und 8 für die Tassenstößel der beiden Einlaßventile dargestellt.

Der Zylinderkopf 1 ist mit dem Zylinderkurbelgehäuse 2 durch Zylinderkopfschrauben 9 verschraubt, von denen lediglich eine dargestellt ist. Zur Aufnahme jener Schraube 9 ist im Zylinderkopf 1 eine Bohrung 10 und im Zylinderkurbelgehäuse eine Gewindebohrung 11 vorgesehen. Die Schraube 9 weist einen Mehrkant-Kopf 12 und einen Bund 13 auf. Die Bohrung 10 im Zylinderkopf 1 ist mit einem Gewinde 14 versehen, in das eine Gewindehülse 15 aus Stahl eingeschraubt ist. Das Gewinde 14 und das damit zusammenwirkende Außengewinde der Hülse 15 sind andersgängig als das Gewinde 16 der Schraube 9 und das damit zusammenwirkende Gewinde der Gewindebohrung 11. Ist das Gewinde 16, wie üblich, rechtsgängig, so ist das Gewinde 14 linksgängig. Die äußere Stirnfläche 17 der Gewindehülse 15 bildet die Auflagefläche für den Bund 13 der Zylinderkopfschraube 9. Die innere Stirnfläche 18 der Gewindehülse 15 liegt über eine Beilagscheibe 19 an einer Schulter 20 an, die in der Bohrung 10 vorgesehen ist. Aussparungen 21 am unteren Ende der Gewindehülse 15 dienen zum Angriff eines Werkzeuges zum Einschrauben der Gewindehülse 15.

Wie aus Fig. 2 ersichtlich ist, ist zwischen den Bohrungen 7 und 8 für benachbarte Tassenstößel nur sehr wenig Platz für die Unterbringung einer Zylinderkopfschraube vorhanden, der keinesfalls ausreicht, um zwischen dem Kopf der Zylinderkopfschraube bzw. bei Verwendung einer Stiftschraube zwischen der Mutter und der Auflagefläche am Zylinderkopf eine Beilagscheibe solcher Größe vorzusehen, daß die zulässige Flächenpressung beim Anziehen der Schraube oder Mutter nicht überschritten wird. Bei dem dargestellten Ausführungsbeispiel wird die Aufnahmefläche für die Schraubenkraft von den Flanken des Gewindes der Gewindehülse 15 bestimmt, und es kann somit durch entsprechende Wahl der Anzahl der Gewindegänge eine ausreichende Fläche zur Aufnahme der Schraubenkraft geschaffen werden, um die Flächenpressung in den zulässigen Grenzen zu halten, ohne daß der hierfür nötige Platz größer sein muß als der Platzbedarf für den Bund 13 der Zylinderkopfschraube 9. Dies ist deutlich aus Fig. 3 ersichtlich.

Dadurch, daß das Gewinde der Gewindehülse 15 andersgängig ist als das Gewinde der Zylinderkopfschraube 9, wird vermieden, daß die Gewindehülse 15 beim Festziehen der Zylinderkopfschraube 9 mitgenommen und zusätzlich eingeschraubt wird. Vielmehr findet ein Verspannen der Gewindegänge der Gewindehülse 15 mit den Gewindegängen des Innengewindes 14 statt, wodurch aufgrund des relativ weichen Materials des Zylinderkopfes 1 erreicht wird, daß alle Gewindegänge tragen und somit eine große Aufnahmefläche für die Schraubenkraft erreicht wird. Dieses Verspannen kann noch verstärkt werden, indem, wie aus Fig. 3 ersichtlich, die äußere Stirnfläche 17 der Gewindehülse 15 die Form eines flachen Hohlkegels und die damit zusammenwirkende Stirnfläche 22 des Bundes 13 der Zylinderkopfschraube 9 eine dazu komplementäre Form hat. Beim Anziehen der Zylinderkopfschraube 9 wird aufgrund der miteinander zusammenwirkenden Schrägflächen 17 und 22 ein Dehnen der Gewindehülse 15 an ihrem äußeren Ende erreicht. Zusätzlich kann die Gewindehülse 15 in üblicher Weise durch ein aushärtbares Kunstharz gegen Verdrehung gesichert werden.

Die Erfindung ist nicht auf das dargestellte Ausführungsbeispiel beschränkt. So kann anstelle der dargestellten Schraube 9 mit einem Mehrkant-Kopf 12 und einem Bund 13 auch eine Stiftschraube mit Mutter verwendet werden, obgleich eine derartige Mutter im allgemeinen mehr Raum beansprucht.

## Patentansprüche

1. Brennkraftmaschine mit einem Zylinderkurbelgehäuse (2) und einem Leichtmetall-Zylinderkopf (1), der mit dem Zylinderkurbelgehäuse durch Schrauben (9) verbunden ist, die sich jeweils durch eine Bohrung (10) im Zylinderkopf erstrecken und in eine Gewindebohrung (11) im Zylinderkurbelgehäuse eingeschraubt sind, wobei in der Bohrung (10) eine Hülse (15) aus einem härteren Material als dem des Zylinderkopfes (1) angeordnet ist, deren äußere Stirnfläche (17) die Auflagefläche für den Kopf (12) oder die Mutter der Zylinderkopfschraube (9) bildet, dadurch gekennzeichnet, daß die Bohrung (10) im Zylinderkopf (1) ein Innengewinde (14) aufweist und die Hülse (15) als Gewindehülse ausgebildet und in das Innengewinde (14) eingeschraubt ist und sich über sein Außengewinde axial am Zylinderkopf (1) abstützt, derart, daß die Schraubenkraft über die Hülse (15), das Gewinde (14) und den Zylinderkopf (1) auf das Zylinderkurbelgehäuse (2) übertragen wird.

2. Brennkraftmaschine nach Anspruch 1, dadurch gekennzeichnet, daß das Gewinde der Gewindehülse (15) andersgängig ist als das Gewinde (16) der Zylinderkopfschraube (9).

3. Brennkraftmaschine nach Anspruch 1 oder 2, dadurch gekennzeichnet, daß der Außendurchmesser der Gewindehülse (15) im wesentlichen dem Außendurchmesser des Kopfes (12) bzw. der Mutter der Zylinderkopfschraube (9) entspricht.

4. Brennkraftmaschine nach einem der Ansprüche 1 bis 3, dadurch gekennzeichnet, daß die äußere Stirnfläche (17) der Gewindehülse (15) die Form eines flachen Hohlkegels und die damit zusammenwirkende Stirnfläche (22) des Kopfes (12) bzw. der Mutter der Zylinderkopfschraube (9) eine dazu komplementäre Form hat.

5. Brennkraftmaschine nach einem der Ansprüche 1 bis 4, Dadurch gekennzeichnet, daß in der Bohrung (10) im Zylinderkopf (1) eine Schulter (20) vorgesehen ist, an der die Gewindehülse (15) mit ihrer inneren Stirnfläche (18) im eingeschraubten Zustand anliegt.

6. Brennkraftmaschine nach Anspruch 5, dadurch gekennzeichnet, daß auf die Schulter (20) eine Scheibe (19) aus einem härteren Material als dem Material des Zylinderkopfes (1) aufgelegt ist.

## Claims

1. Internal combustion engine with a cylinder crank case (2) and a light alloy cylinder head (1) which is connected to the cylinder crank case by bolts (9) which extend through a bore (10) in the cylinder head and are screwed into a tapped hole (11) in the cylinder crank case, whereby a bushing (15) of a material harder than the material of the cylinder head (1) is arranged in the bore (10), the outer end face (17) of which bushing forms the bearing surface for the head (12) or the nut of the cylinder head bolt (9), characterized in that the bore (10) in the cylinder head (1) comprises an internal thread (14) and that the bushing (15) is a threaded bushing and is screwed into the internal thread (14) and is supported axially on the cylinder head (1) through its external thread in such way that the screw force is transmitted to the cylinder crank case (2) through the bushing (15), the thread (14) and the cylinder head (1).

2. Internal combustion engine according to claim 1, characterized in that the thread of the threaded bushing (15) is opposite to the thread (16) of the cylinder head bolt (9).

3. Internal combustion engine according to claim 1 or 2, characterized in that the external diameter of the threaded bushing (15) corresponds essentially to the external diameter of the head (12) or nut of the cylinder head bolt (9).

4. Internal combustion engine according to any of claims 1 to 3, characterized in that the outer end face (17) of the threaded bushing (15) is in the shape of a shallow hollow cone and the face (22) of the head (12) or nut of the cylinder head bolt (9) cooperating with said outer end face (17) has a complementary shape.

5. Internal combustion engine according to any of claims 1 to 4, characterized in that a shoulder (20) is provided in the bore (10) in the cylinder head (1) against which the inner surface (18) of the threaded bushing (15) is supported in the screwed-in state.

6. Internal combustion engine according to claim 5, characterized in that a washer (19) of a material harder than the material of the cylinder head (1) is placed on the shoulder (20).

## Revendications

1. Moteur à combustion interne avec un carter-moteur (2) et une culasse (1) en alliage léger, fixée au carter par des vis (9), qui traversent un trou (10), prévu dans la culasse, et sont vissées dans un taraudage (11), pratiqué dans le carter-moteur, une douille (15), composée d'un matériau plus dur que celui de la culasse (1), et dont la surface frontale externe (17) constitue la surface d'appui pour la tête (12) ou pour l'écrou de la vis de culasse (9), étant disposée dans le trou (10), caractérisé en ce que le trou (10), prévu dans la culasse (1), présente un taraudage (14), la douille (15), réalisée sous forme de douille filetée, étant vissée dans le taraudage (14) et s'appuyant axialement sur la culasse (1), par l'intermédiaire de son filetage mâle, de telle sorte que la force de serrage est transmise au carter-moteur (2) par la douille (15), le filetage (14) et la culasse (1).

2. Moteur à combustion interne suivant la revendication 1, caractérisé en ce que le filetage de la douille (15) a une inclinaison opposée de celle du filetage (16) de la vis de culasse (9).

3. Moteur à combustion interne suivant l'une des revendications 1 et 2, caractérisé en ce que le diamètre externe de la douille filetée (15) correspond essentiellement au diamètre externe de la tête (12) et/ou de l'écrou de la vis de culasse (9).

4. Moteur à combustion interne suivant l'une quelconque des revendications 1 à 3, caractérisé en ce que la surface frontale externe (17) de la douille filetée (15) a la forme d'un cône creux aplati, la surface frontale concourante (22) de la tête (12) et/ou de l'écrou de la vis de culasse (9) ayant une forme complémentaire.

5. Moteur à combustion interne suivant l'une quelconque des revendications 1 à 4, caractérisé en ce que le trou (10), pratiqué dans la culasse (1), présente un épaulement (20), sur lequel s'applique la surface frontale interne (18) de la douille filetée (15), une fois vissée.

6. Moteur à combustion interne suivant la revendication 5, caractérisé en ce que l'épaulement (20) supporte une rondelle (19), composée d'un matériau plus dur que celui de la culasse (1).

# FIG.1

# FIG.2

# FIG.3